# EUROPEAN PATENT APPLICATION

(11) **EP 0 605 166 A1**
(43) Date of publication of application: **06.07.1994**
(21) Application number: 93310306.1
(22) Date of filing: 20.12.1993
(51) Int. Cl.: H04M 3/50

(54) **Voice response script generator system and method**

(30) Priority: 28.12.1992 US 997222
(71) Applicant: INTERVOICE, INC., Dallas, Texas 75252 (US)
(72) Inventor: Hambleton, Myra Ann, Plano, Collin County Texas 75074 (US)
(74) Representative: Howick, Nicholas Keith

(57) **Abstract**

A system and method for creating a semicustom voice response script is disclosed. The system and method comprise circuitry and software for presenting a series of screens to a user on an output device of a general purpose computer, the screens containing a plurality of programmable fields, circuitry and software for accepting programming input from the user on an input device of the general purpose computer into the plurality of programmable fields, circuitry and software for generating the semicustom voice response script from the plurality of programmable fields, the generating circuitry and software choosing and arranging stored script routines according to instructions input in the plurality of programmable fields and circuitry and software, under control of the voice response script, for interacting with a person over a telephone line to take information from and given information to the person.

## Description

### TECHNICAL FIELD OF THE INVENTION

This invention relates to a voice response script generator of the type used in conjunction with configurable voice response units in telecommunications environments and, more specifically, to a voice response script generator which allows a nonprogrammer to create semicustom voice response scripts.

### BACKGROUND OF THE INVENTION

Voice response units ("VRU"s), in the general sense, are not new. VRUs are a combination of electronic circuitry (hardware) and software used in conjunction with a telephone system to handle calls to or from persons. A VRU responds to a person's command, whether that command be made by pressing a button on a touch-tone telephone or by voice. The VRU interprets and responds to the command in a human voice, thereby delivering information to the person in a form he can understand.

The hardware portion of a VRU typically comprises a general purpose computer and circuitry which allows the general purpose computer to interface with a telephone system. As with all applications for a general purpose computer, a key component of the VRU is its software. Obviously, at a low level in the VRU, software is required to drive the various hardware components of the general purpose computer and telecommunications circuitry. However, there is also a higher level of software residing within the VRU, termed a "script," which directs the high level operation of the VRU, in other words, the manner in which the VRU interacts with the person. The script typically determines what the VRU says to the person and under what circumstances it is said.

By way of example, a person may wish to know his checking account balance at his local bank. If the local bank has been equipped with a VRU for such purposes, the person can simply call the VRU, which may begin by answering in a human voice "this is your local bank, thank you for calling" and follow with a list (or menu) of transactions that may take place in conjunction with the VRU, viz. "press '1' for an account balance inquiry, press '2' for a transfer of money between accounts, press '3' to hear our CD rates, press '4' to bank holidays or press '0' or hold and an operator will be with you shortly." The person has thereby been informed of several options which are available to him. Since the person desires checking account balance information, he presses "1." Under direction of the script, the VRU responds by presenting a second-level menu to the person, viz. "press '1' for checking account balance, press '2' for savings account balance or press '3' for Christmas account balance." In our example, the person presses '1' to access his checking account balance. Again, under direction of the script and via the local bank's mainframe database computer, the VRU queries the bank's database to determine the balance of the person's checking account. Upon receiving the balance information, the VRU may respond to the person thus: "Your checking account balance is $13.62. Press '1' should you desire another transaction." if (owing to its precarious balance) the person desires to transfer some money into his checking account, he may do so by pressing "1" on his touch-tone telephone, following the script's direction through other menus to continue the task.

VRU scripts must be customized for each VRU application. Although VRU scripts for certain types of applications (i.e. banking) may have many elements in common, a programming task nonetheless arises for each VRU application. In the past, professional programmers have been employed to program VRU scripts. This was a time-consuming and expensive task. Furthermore, because the professional programmers were one step removed from the bank employees, who best understand how the bank's VRU should operate, the script that resulted from such a process may not have been exactly what the bank wanted. Finally, as time passed by and requirements for the VRU changed, professional programmers had to be brought back time and again to modify the script they had originally developed for the application.

Because VRU applications in a particular industry (in this example, banking) have many elements in common, it becomes highly desirable to develop a script generator which allows bank personnel, who are relatively untrained in computer programming, to generate semicustom scripts for a particular VRU application. It is also highly desirable to develop such a generator which is user-friendly in the way it presents itself to the bank employee/user, allowing the bank employee/user to readily understand and work with the options made available.

The aforementioned VRUs, absent a script generator, failed to address this pressing problem. Therefore, the present invention represents a significant step, allowing the programming of VRUs to fall in the hands of those who previously were far removed from the process. By doing this, obtaining and maintaining a VRU had become more economical, effective and efficient.

### SUMMARY OF THE INVENTION

It is accordingly a primary object of the present invention to provide a semicustom voice response script generator, comprising circuitry and software for presenting a series of screens to a user on an output device of a general purpose computer, the screens containing a plurality of programmable fields, circuitry and software for entering programming input from the user on an input device of the general purpose computer into the plurality of programmable fields and circuitry and software for generating the semicustom voice response script from stored script routines assembled according to instructions input in the plurality of programmable fields.

Another primary object of the present invention is to provide a method of generating a voice response script, comprising the steps of presenting a series of screens to a user on an output device of a general purpose computer, the screens containing a plurality of programmable fields, entering programmable input from the user on an input device of the general purpose computer into the plurality of programmable fields and generating the semicustom voice response script from stored script routines assembled according to instructions input in the plurality of programmable fields.

A further object of the present invention is to provide a semicustom voice response script generator wherein a user selects option presented in a plurality of screens that thereby define the semicustom voice response script.

Another object of the present invention is to provide a semicustom voice response script generator wherein the voice response script operates in conjunction with a voice response system.

A further object of the present invention is to provide a semicustom voice response script generator wherein the voice response script and a voice response system cooperate to answer an incoming call from a person.

Still another object of the present invention is to provide a semicustom voice response script generator wherein the voice response script presents options to a person, the options having been previously selected by a user.

Still yet another object of the present invention is to provide a semicustom voice response script generator wherein the voice response script and a voice response system cooperate to reply to an inquiry from a person by voice.

Another object of the present invention is to provide a semicustom voice response script generator wherein the voice response script operates to supply banking information to a person.

In the attainment of the foregoing objects, the preferred embodiment encompassing the present invention is a system for creating a semicustom voice response script comprising circuitry and software for presenting a series of screens to a user on an output device of a general purpose computer, the screens containing a plurality of programmable fields, circuitry and software for accepting programming input from the user on an input device of the general purpose computer into the plurality of programmable fields, circuitry and software for generating the semicustom voice response script from the plurality of programmable fields, the generating circuitry and software choosing and arranging stored script routines according to instructions input in the plurality of programmable fields and circuitry and software, under control of the voice response script, for interacting with a person over a telephone line to take information from and give information to the person. An application of particular import for the above-described system is in the field of banking wherein the semicustom voice response script is designed to supply banking information to a person and wherein the plurality of fields include fields containing financial data, data pertaining to telephone extensions to be called when certain conditions are satisfied and data pertaining to bank holidays, among other things. Finally, the semicustom voice response script allows for collection of statistics concerning calls received or handled by the system.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 illustrates a "main menu" options list;
FIGURE 2 illustrates a "checking functions" options list;
FIGURE 3 illustrates a "savings functions" options list;
FIGURE 4 illustrates a "IRA functions" options list;
FIGURE 5 illustrates a "CD functions" options list;
FIGURE 6 illustrates a "loan functions" options list;
FIGURE 7 illustrates a "bank card functions" options list;
FIGURE 8 illustrates a "rate information" options list;
FIGURE 9 illustrates a "general information" options list;
FIGURE 10 represents a "customer service" options list;
FIGURE 11 illustrates a typical windows desktop screen;
FIGURE 12 illustrates a "desktop manager" window;
FIGURE 13 illustrates a "main group" window;
FIGURE 14 illustrates a "main group" window;
FIGURE 15 illustrates a "main group" window;
FIGURE 16 represents a "tasks list" window;
FIGURE 17 represents a "robot operator/bank" window;
FIGURE 18 represents a "robot operator/bank" window;
FIGURE 19 represents an "IQ talk view: main view" window;
FIGURE 20 illustrates an "application business hours" window;
FIGURE 21 represents a modify week day" window;
FIGURE 22 illustrates an "add holiday" window;
FIGURE 23 illustrates a "modify holiday" window;
FIGURE 24 illustrates a "global system parameters" window;
FIGURE 25 illustrates a "transfer extensions" window;
FIGURE 26 illustrates a "rate functions" window;
FIGURE 27 illustrates a "money market rates" window;
FIGURE 28 illustrates a "CD rates" window;
FIGURE 29 illustrates an "IRA rates" window;
FIGURE 30 represents a "home equity rates" window;
FIGURE 31 represents a "car loan rates" window;
FIGURE 32 represents a "history" report;
FIGURE 33 represents a "statistics" report;
FIGURE 34 represents a "total calls on each phone line" report;
FIGURE 35 illustrates a "total calls on each phone line" report;
FIGURE 36 illustrates a "total calls by time of day" report;
FIGURE 37 illustrates a "total calls by time of day" report;
FIGURE 38 illustrates a "call duration counts" report;
FIGURE 39 illustrates an "events" report;
FIGURE 40 illustrates a "call termination" report;
FIGURE 41 illustrates a "menu 'main menu' selections" report;
FIGURE 42 illustrates a "menu 'checking' selections" report;
FIGURE 43 illustrates a "menu 'savings menu' selections" report;
FIGURE 44 illustrates a "prompt time-outs" report; and
FIGURE 45 illustrates a "message log" report.

### DETAILED DESCRIPTION OF THE INVENTION

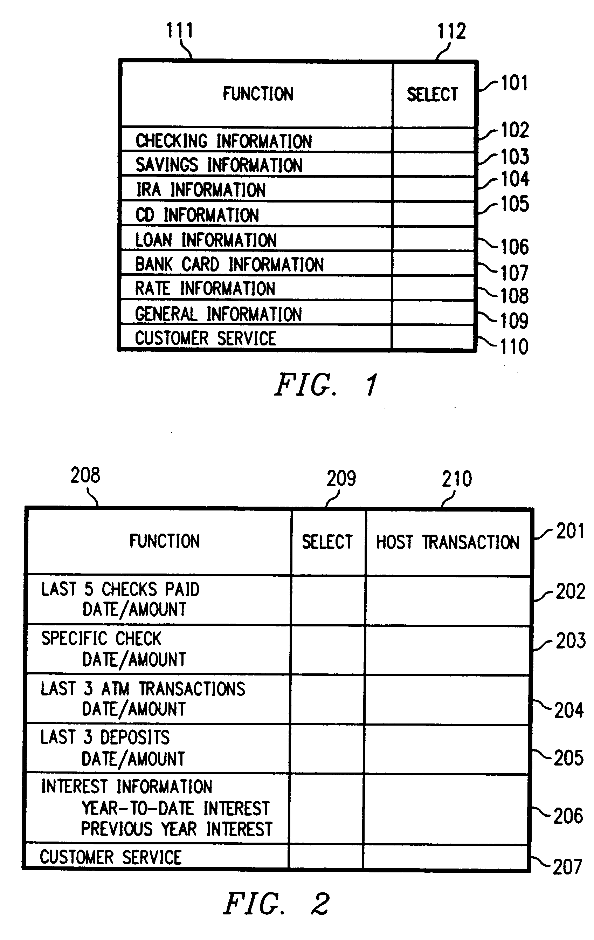

The preferred embodiment of the present invention is best understood by referring to FIGURES 1-45 of the drawings, like numerals being used for like and corresponding parts of the various drawings.

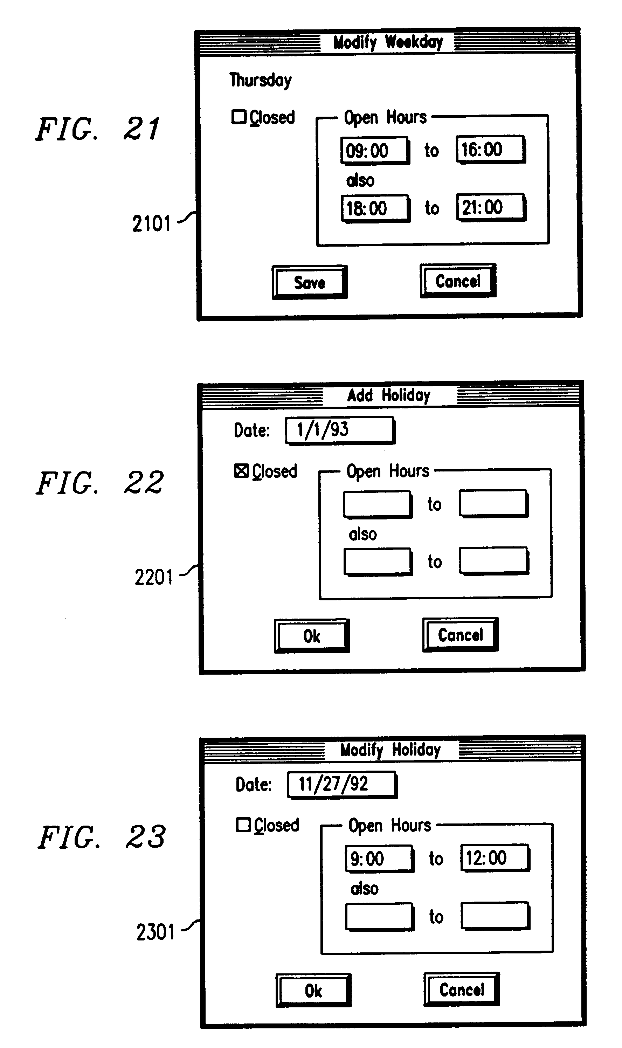

FIGURES 1 to 10 represent options which are available to a user at various points during operation of the VRU of the present invention. These option lists are presented in FIGURES 20 to 31 as window presentations in the preferred embodiment of the present invention. It should be understood that, in the preferred embodiment, a user actually enables the options as indicated in FIGURES 20 to 31. In other words, FIGURES 1 to 10 are exemplary in nature or are an alternative embodiment of the present invention.

Turning now to FIGURE 1, which illustrates a "main menu" options list, shown is a main menu of options, generally designated 101, containing possible menu selections pertaining to the checking information 102, savings information 103, individual retirement account ("IRA") information 104, certificate of deposit ("CD") information 105, loan information 106, bank card information 107, rate information 108, general information 109 and customer service 110. These selections are listed in a function column 111. To the right of the function column 111 is a select column 112. A user, who shall be assumed to be inexperienced in computer programming, can simply enable any one of the menu selections 102-110 by marking next to the menu item 102-110 in the select column 112. By way of example, if the user wishes to enable only the checking information 102, savings information 103 and general information 109 selections, the user may simply select by marking in the select column 112 next to those three information menu selections. For purposes of this description, it shall be assumed that the user wishes to enable all functions.

Accordingly, turning now to FIGURE 2, illustrated is a "checking functions" options list presented when the checking information menu item 102 of FIGURE 1 is selected. The "checking functions" options list, generally designated 201, comprises a last five checks paid selection 202, specific check selection 203, last three automated teller machine ("ATM") transactions selection 204, last three deposits selection 205, interest information selection 206 and customer service selection 207. The selections 202-207 are presented in a function column 208, next to which is a select column 209 for marking which of the selections are to be offered and a host transaction column 210, which contains a label to identify transactions to use to retrieve the information. If the user does not enter a label, the generator will supply a default "preferred" transaction label. The menu selections 202-207 operate in a fashion similar to those menu selections 102-110 presented in FIGURE 1. If the user wishes to offer a particular selection, he should place a mark in the select column 209 next to the selection desired. As to the host transaction column 210 labels, if the user does not enter a label, preferred transaction labels are used instead.

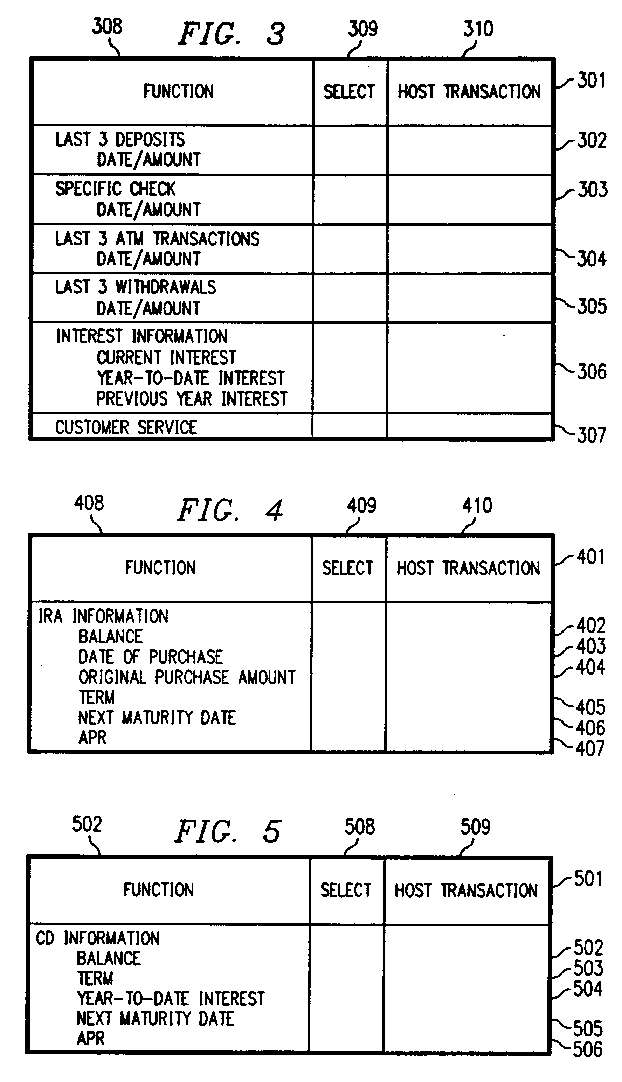

Turning now to FIGURE 3, shown is a "savings functions" options list enabled when the savings information selection 103 of FIGURE 1 is selected. The "savings functions" options list, generally designated 301, consists of a last 3 deposits selection 302, a specific check selection 303, a last three ATM transactions selection 304, a last three withdrawals selection 305, an interest information selection 306 and a customer service selection 307. The selections 302-307 are detailed in a function column 308, next to which, as in FIGURE 2, are select columns 309 and host transaction column 310.

It is important to note at this point that the structure and function of the menus detailed in FIGURES 1, 2 and 3 are extremely similar. This is of particular importance in interacting with a relatively unsophisticated user. In other words, by maintaining uniformity of menus, the script generator is "user friendly," thereby optimizing the efficiency and effectiveness of the user in producing the desired script.

The "savings functions" options list 301 is managed in the same manner as the "checking functions" options list 201 of FIGURE 2. This scheme repeats itself throughout the script generator screens. In other words, the user provides selections in the select column 309 and host transaction labels identifying transactions used to retrieve information from the bank's main frame in the host transaction column 310. Again, when host transaction labels are not provided in the host transaction column 310, the script generator supplies default or preferred transaction labels.

Turning now to FIGURE 4, shown is a "IRA functions" options list, generally designated 401. The "IRA functions" options list 401 allows the user to select information regarding IRAs which may be given to a person interacting with the VRU. Specifically, the options list 401 provides for optional balance information 402, date of purchase information 403, original purchase amount information 404, term information 405, next maturity date information 406 and annual percentage rate ("APR") information 407 selections. Again, the selections are located in a function column 408. Select 409 and host transaction 410 columns allow the user to select those pieces of IRA information desired to be communicated to the person interacting with the VRU and also allow the user to provide host transaction labels where desired.

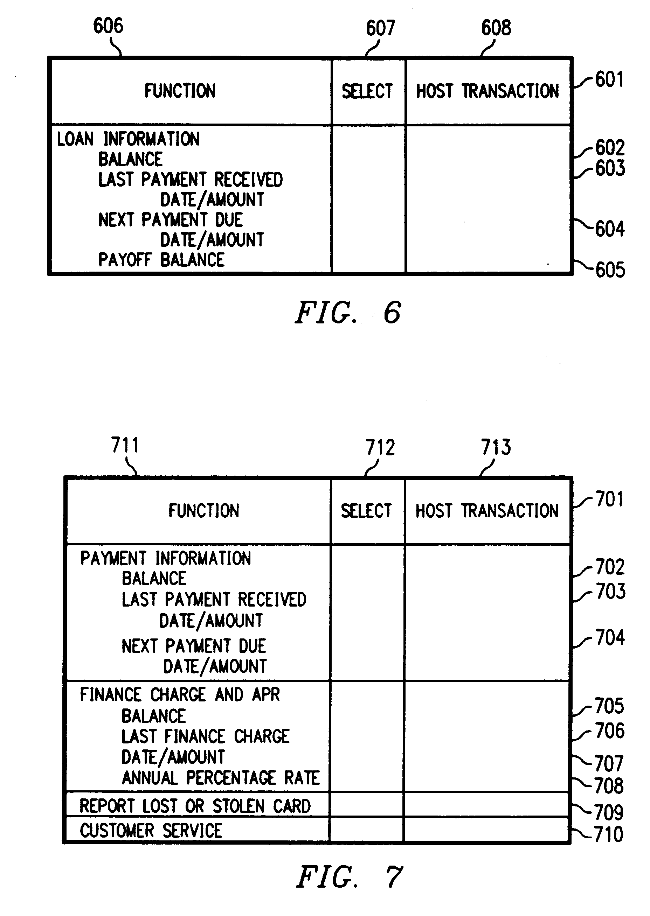

Turning now to FIGURE 5, shown is a "CD functions" options list, generally designated 501, comprising CD information selections including balance information 502, term information 503, year-to-date interest information 504, next maturity date information 505 and APR information 506. Again, function 507, select 508 and host transaction 509 columns allow the user to select and provide host transaction labels, as before.

Turning now to FIGURE 6, shown is a "loan functions" screen, generally designated 601, comprising selections pertaining to loan information which can be communicated through the VRU to a person, including balance information 602, last payment received information 603, next payment due information 604 and payoff balance information 605. As with the previous screens, the "loan functions" options list 601 provides function 606, select 607, and host transaction 608 columns.

Turning now to FIGURE 7, shown is a "bank card functions" options list, generally designated 701 and comprising a payment information selection further comprising balance information 702, last payment received information 703, and next payment due information 704. The "bank card functions" options list 701 further comprises a finance charge and APR selection comprising balance information 705, last finance charge information 706, date/amount information 707 and APR information 708. Finally, the "bank card functions" screen comprises selections pertaining to report lost or stolen card information 709 and customer service 710. Again, a function column 711 lists the available functions, a selection column 712 allows the user to select which of the functions listed in the function column 711 are desired and a host transaction column 713 allows for host transaction labels to be provided.

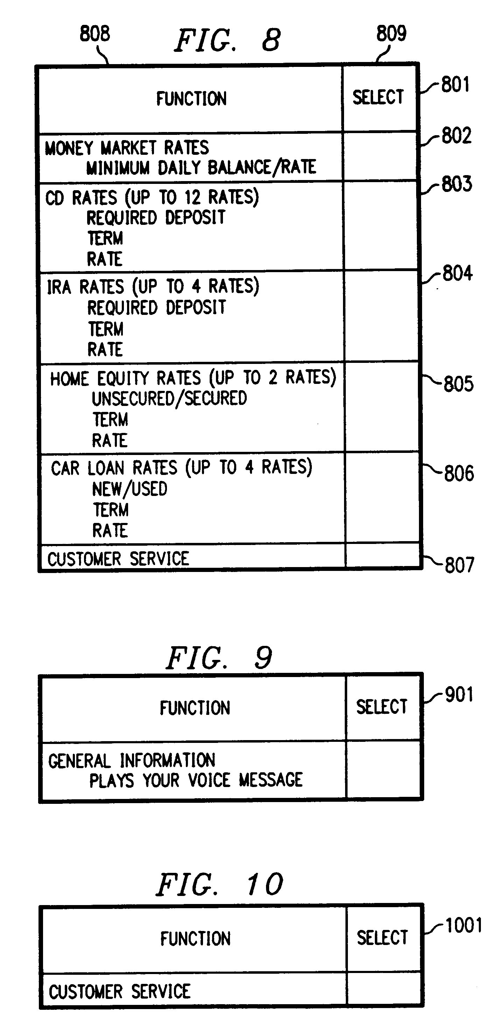

Turning now to FIGURE 8, shown is a "rate information" options list, generally designated 801, comprising selections pertaining to money market rates 802, CD rates 803, IRA rates 804, home equity rates 805, car loan rates 806 and customer service 807. The CD rates 803, IRA rates 804, home equity rates 805 and car loan rates 806 each comprise information regarding term and rate, among other things. Since the "rate information" options list 801 does not require interaction with the host computer, no host transaction column is provided. Therefore, a function column 808 and selection column 809 are simply provided.

Turning now to FIGURE 9, shown is a "general information" options list, generally designated 901. The general information function simply allows one to play a message to a person interacting with the VRU. The message may tell, for instance, about new offerings, new hours or new bank locations. The user may record a message, which is stored in memory associated with the VRU for later playback.

Turning now to FIGURE 10, shown is a "customer service" options list, generally designated 1001. The customer service function allows a person to transfer to a live operator during working hours. After hours, the VRU plays a message that indicates that the bank is closed and when to call back.

At this point, the user has supplied almost all the selection information necessary to define a semicustom script. The last step which the user must take is to choose a type of host with which the VRU must interact. Two choices that will always be present are: "IVI Preferred" and "Custom." "IVI Preferred" is a host transaction set which has been predefined by the assignee of the present invention; the user must then program the VRU script generator to meet predefined screen definitions. "Custom" is a host transaction set which the user must define himself. Of course, the script generator can function with more than one predefined host transaction set, thereby allowing a user to select which one of alternative sets is most appropriate to use to interact with the user's host computer.

Following definition of the appropriate host transaction set, the script generator merges a script corresponding to the chosen transaction set with the script the user has defined for interacting with a person, called the "application script." The application options that the user has chosen to define a particular application script are stored in a plurality of translate tables which are loaded at VRU script runtime to control operation of the application script and thereby control options presented to the person interacting with the VRU. It is important to note that options (such as transfer extensions, system option, business hours and rates) can be changed while the VRU script is running and the VRU is interacting with a person. As soon as new options are chosen, the new options are loaded into main memory and are written to disk, thereby supplanting previously chosen options and allowing the VRU to begin responding with the latest information.

After the user supplied all the required information described above, the script generator can, with this information, create a script automatically in the same manner in which a special-purpose compiler operates. In other words, based on the user's selections, the script generator selects appropriate script routines from a library of routines and assembles them in proper order to generate a script.

At this point, it is helpful to discuss the above with respect to specific windows and screens employed in the preferred embodiment of the present invention.

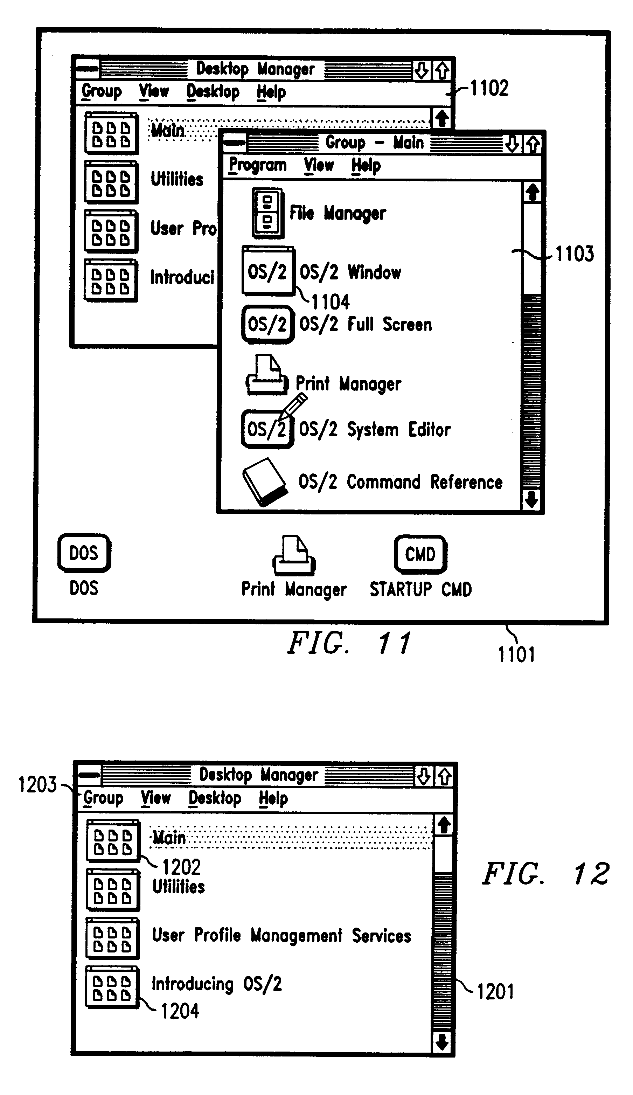

Accordingly, turning now to FIGURE 11, shown is a window desktop, generally designated 1101. The desktop 1101 comprises standard Operating System/2 ("OS/2") windows 1102, 1103. The standard OS/2 windows 1102, 1103 each contain a variety of window icons, typified by icon 1104. The window desktop 1101 provides a graphical way in which to access programs and other functions on a typical IBM compatible personal computer. It should be understood at this point that the use of OS/2 windows, IBM-compatible PCs and the like is merely illustrative. The present invention is entirely independent of the hardware on which it runs or software in conjunction with which it runs. However, IBM-compatible PCs are ubiquitous and are the preferred environment for operation of the present invention. Accordingly, it is most reasonable to present the present invention in light of its preferred environment.

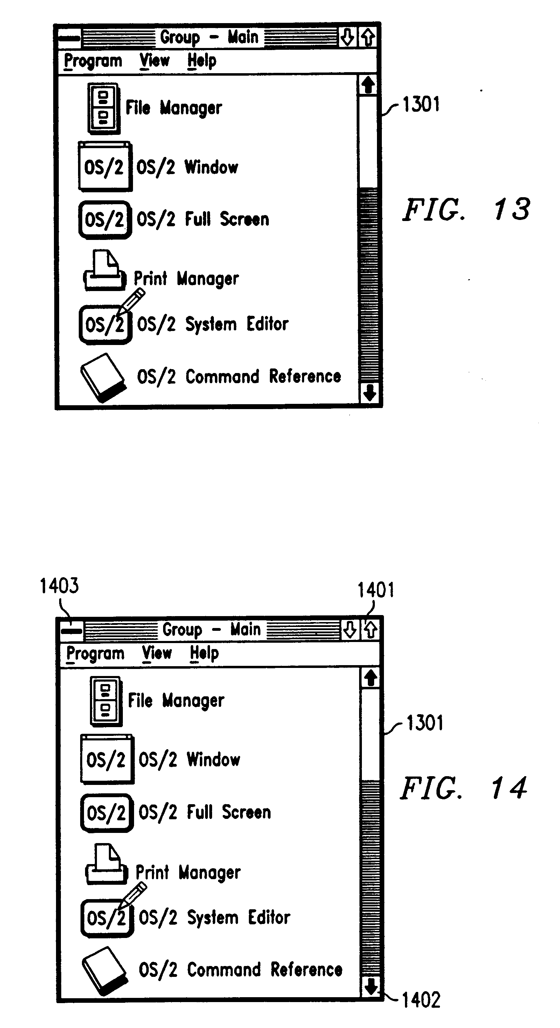

Turning now to FIGURE 12, shown is a desktop manager window, generally designated 1201. This standard OS/2 window displays groups of programs. When a group is selected, such as illustrated by a "main" icon 1202, a window corresponding to the "main" icon 1202 appears listing programs that may be executed. The desktop manager window 1201 also affects how windows and icons are viewed and arranged on the windows desktop (generally shown in FIGURE 11). A desktop option 1203 allows a user to shut down all programs and the system. An "introducing OS/2" program group represented by icon 1204 is an on-line tutorial that beginning OS/2 users may find helpful.

Turning now to FIGURE 13, shown is a main group window, generally designated 1301, which appears when the "main" icon 1202 of FIGURE 12 is selected from the desktop manager window 1201 of FIGURE 12. The main group window 1301 is a main list of programs which may be started.

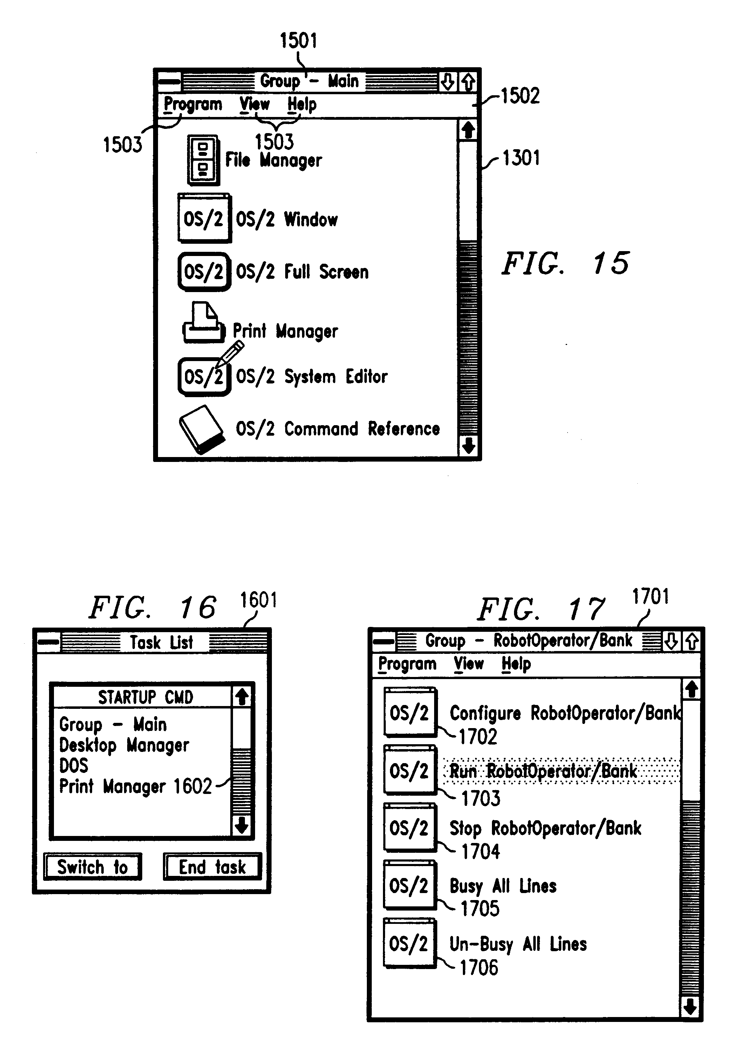

Turning now to FIGURE 14, shown is the main group window 1301 of FIGURE 13. The main group window 1301 comprises sizing buttons 1401, scroll arrow buttons 1402 and a system menu button 1403. These buttons allow sizing of the window (via buttons 1401), scrolling within the window (via buttons 1402) and exiting from the window (via button 1403).

Turning now to FIGURE 15, shown again is the main group window 1301. The main group window 1301 further comprises a window title bar 1501 (which contains the title of the window), an action bar 1502 (containing a selection of options) and action bar options 1503.

Turning now to FIGURE 16, shown is a task list window, generally designated 1601, comprising a list of programs 1602 which are currently running. The task list window 1601 allows any one of the programs listed in the list 1602 to be selected to run in the foreground at any time.

Referring now to FIGURE 17, shown is the main opening window of RobotOperator software, which controls the VRU in accordance with the semicustom script which has been previously defined by the user.

The main window, generally designated 1701 comprises a list of options allowing a user to configure the RobotOperator 1702, run the RobotOperator 1703, stop the RobotOperator 1704, render all incoming telephone lines busy 1705 and release for active duty all telephone lines 1706.

By choosing options from this main window 1702, a user can run or stop the RobotOperator and perform other major functions with respect to the RobotOperator.

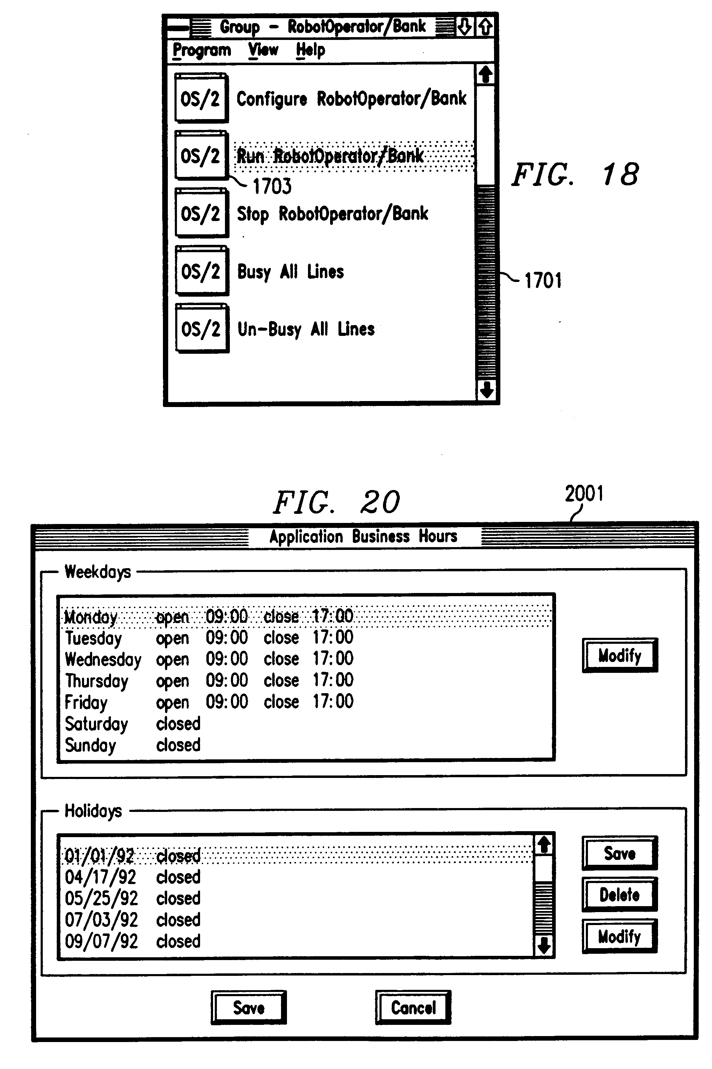

Turning now to FIGURE 18, shown is the RobotOperator/Bank window 1701 of FIGURE 17 with the run RobotOperator operator 1703 highlighted. By highlighting the option 1703 and double-clicking on the mouse attached to the general purpose IBM-compatible PC, the user can enable the RobotOperator.

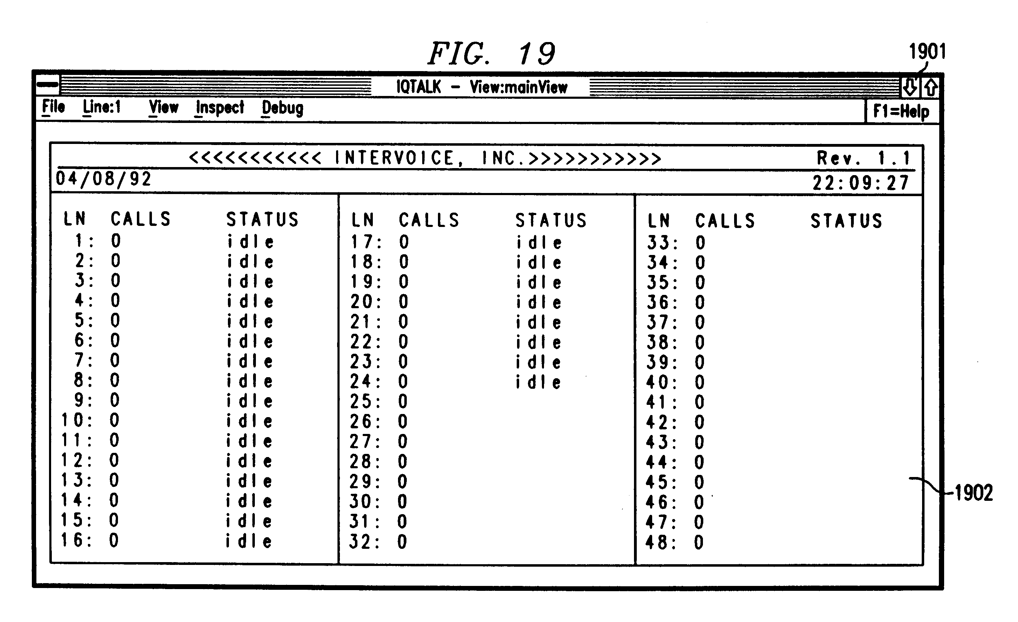

Turning now to FIGURE 19, shown is an IQTalk View: Main View window, generally designated 1901. The window 1901 shows the status of telephone lines coupled to the VRU. This status is shown in a status box 1902 which, in the example shown in FIGURE 19, has 24 lines connected and idle of a possible 48 maximum allowed by the VRU hardware. As calls are received and handled, the IQTalk View: Main View screen will show busy statuses for the appropriate lines, along with the number of calls received on a particular line. This screen therefore helps a user and the bank evaluate the efficiency and effectiveness of its VRU performance to allow it to make better decisions with respect to use of its resources.

Turning now to FIGURE 20, shown is an Application Business Hours window 2001 which allows the user to enter banking hours and banking holidays. This allows the user to indicate the days and times when customer service representatives are able to take calls transferred from the VRU. After hours or on non-business days the VRU can either tell the person that no representatives are available or take a message instead (with respect to lost or stolen bank cards).

Turning now to FIGURE 21, shown is a Modify Weekday window 2101 which allows the user to change the bank's hours on a particular day.

Turning now to FIGURE 22, shown is an Add Holiday window 2202 which allows the user to add holidays on which the bank is completely closed or where banking hours are limited.

Turning now to FIGURE 23, shown is a Modify Holiday window 2301 which allows the user to modify times of holidays which have already been entered into the system.

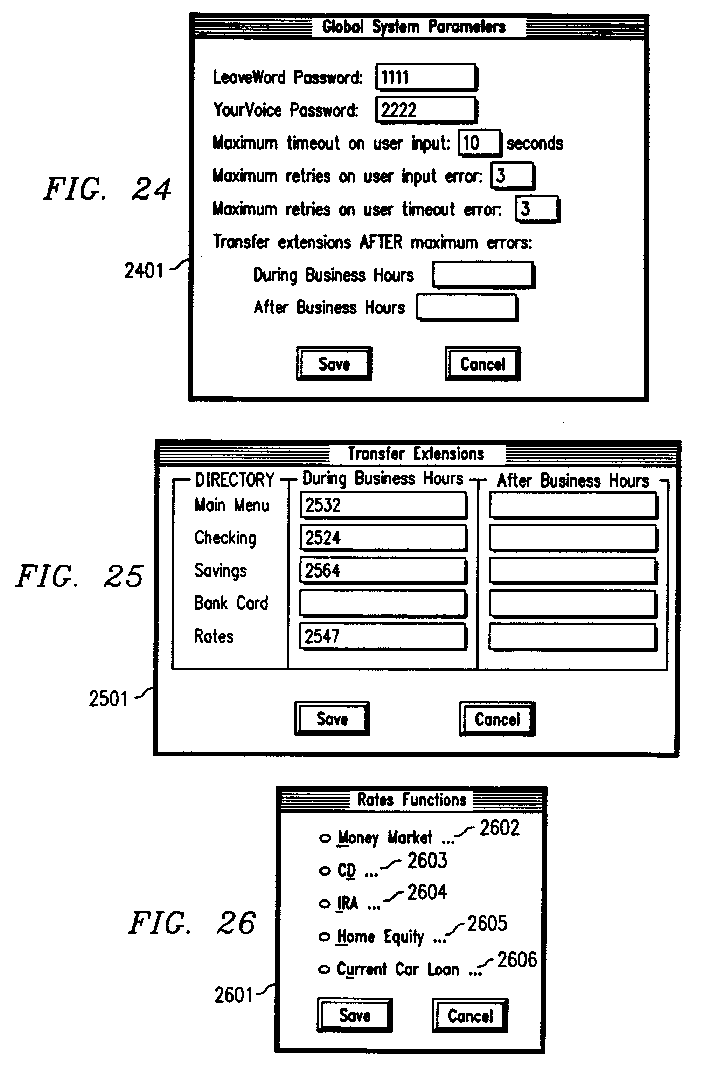

Turning now to FIGURE 24, shown is a Global System Parameters window 2401 which allows the user to configure the system globally for necessary passwords, errors before time-out, retries and transfer extensions on error.

Turning now to FIGURE 25, shown is a Transfer Extensions window 2501 which allows the user to designate extensions to which the VRU can transfer calls should the person wish to transfer to a human operator. Transfers are context-sensitive. For instance, in the example shown in FIGURE 25, general inquiries, directed from the main menu, are directed to extension 2532. Checking inquires are directed to extension 2524, savings inquiries are directed to extension 2564 and rates may be obtained by transferring to extension 2547. Apparently, there is no extension to be forwarded when questions regarding bank card information arise. Apparently, in this example, the VRU has not been configured to handle bank card information.

Turning now to FIGURE 26, shown is a Rates Functions window 2601 comprising a menu of user options corresponding to money market 2602, CD 2603, IRA 2604, home equity 2605 and current car loan 2606 options. The user may select a particular option 2602-2606 to change rates associated with that option. For instance, if CD rates have changed, as they typically do from day-to-day, the user may select the CD option 2603, which will then present him with a screen, allowing him to change the rates. Once the rates have been changed, the VRU, in interacting with persons over the telephone, will quote the newly changed rates, thereby assuring up-to-date information.

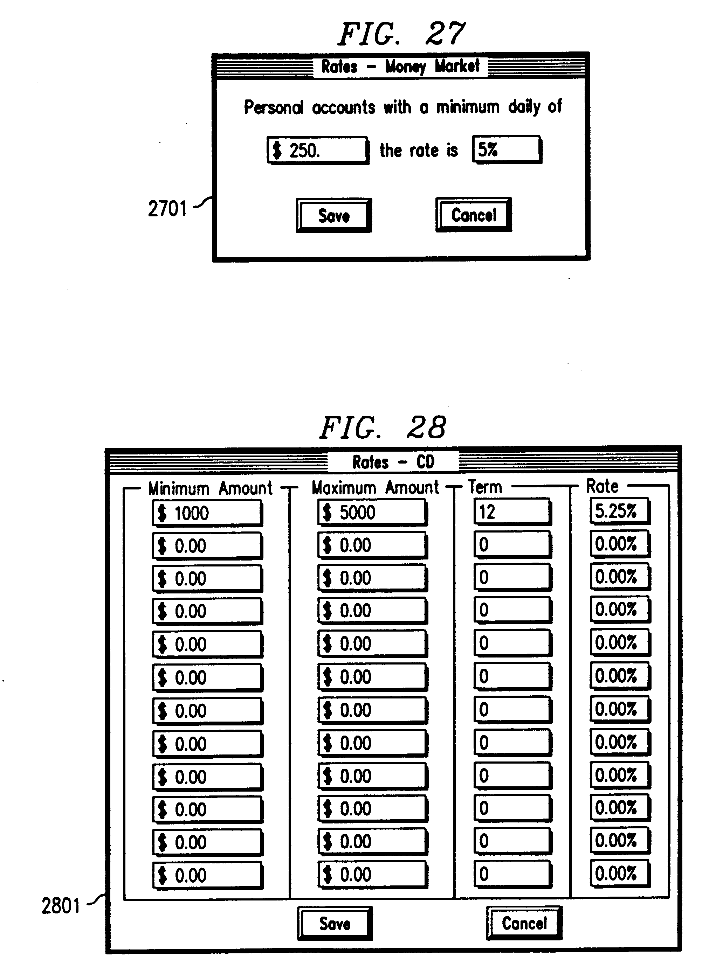

For example, turning now to FIGURE 27, shown is a Money Market Rates window 2701, which allows the user to update money market rates.

Turning now to FIGURE 28, shown is a CD Rates screen 2801 containing a plurality of fields allowing a user to enter the various rates, terms and principal amounts for CDs.

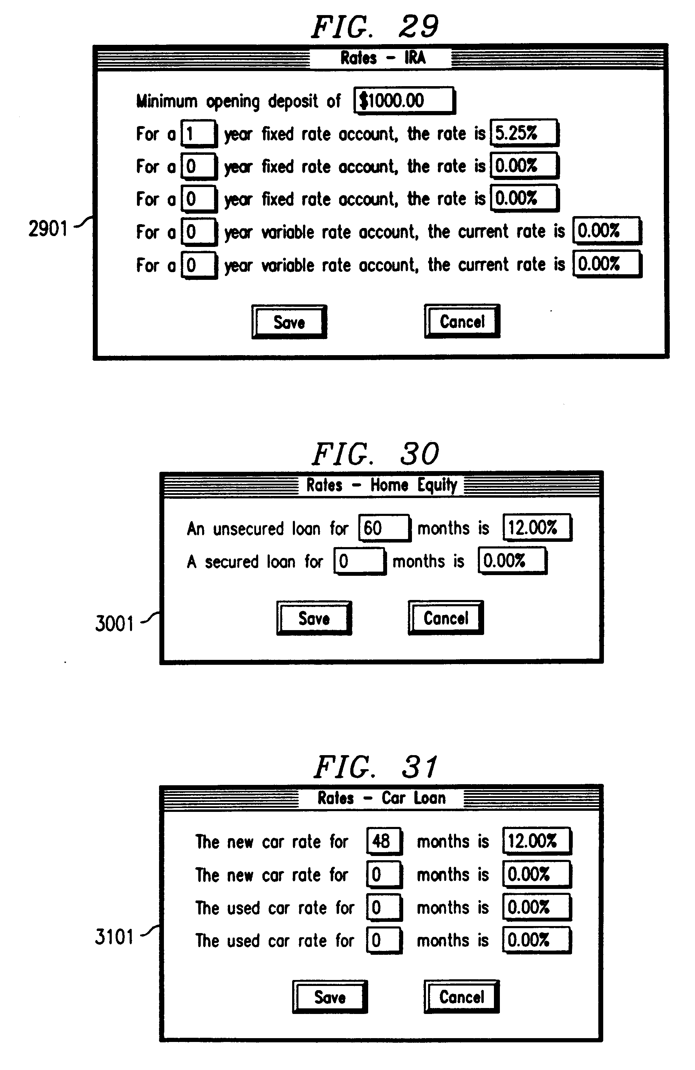

Turning now to FIGURE 29, shown is an IRA Rates window 2901 comprising various fields of information which may be filled-in to provide information concerning principal amounts, rates and terms for IRAs.

Turning now to FIGURE 30, shown is a Home Equity Rates window 3001 allowing the user to change home equity rates.

Turning now to FIGURE 31, shown is a Car Loan Rates window 3101 which allows a user to enter rates and terms for car loans.

An integral and valuable function of the present invention is to provide comprehensive and detailed reports concerning its operation. These reports, issued on a periodic basis, complement the real time report detailed in FIGURE 19 as the IQTalk View: Main View report on line usage.

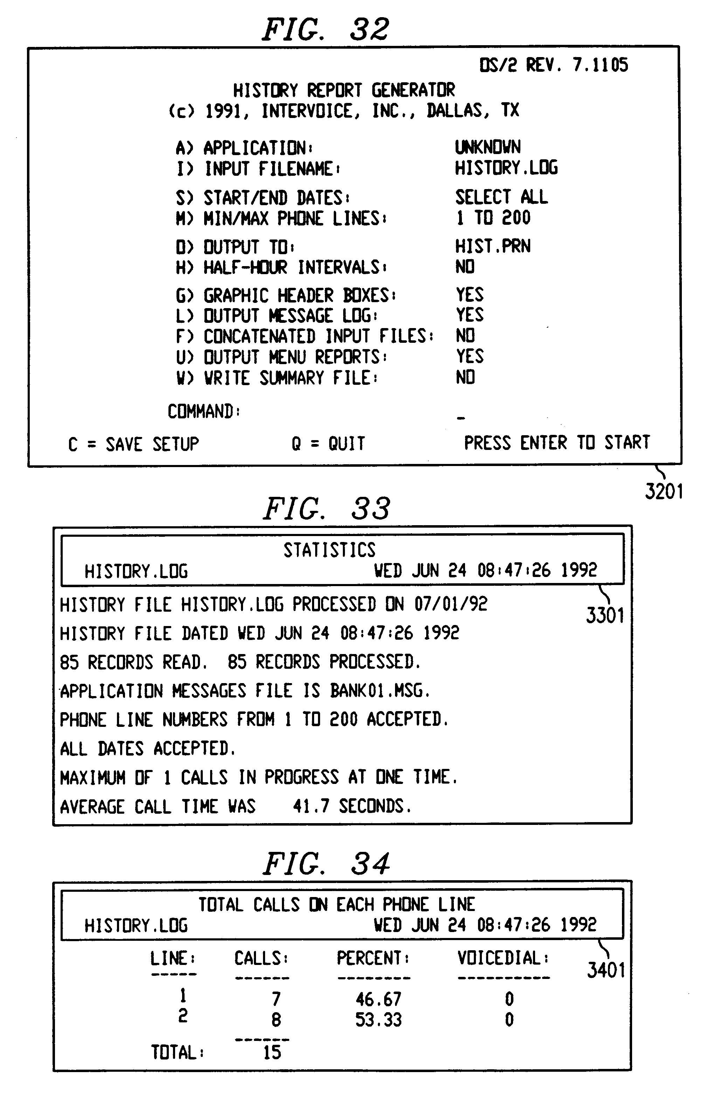

In contrast, periodic system reports, detailed in FIGURES 32-45 give the user and his organization an overview of activity handled by the VRU during a particular period, allowing the user and his organization to optimize use of the VRU, thereby increasing its efficiency and effectiveness.

Turning now to FIGURE 32, detailed is a Report Generator screen 3201 which a user accesses to request one or more of the reports that the VRU is able to produce. The user must supply appropriate answers to options listed. When all the options have been selected, the user starts the report generator by pressing "enter."

FIGURES 33-45 detail a typical report produced by the VRU. For instance, FIGURE 33 details a Statistics report 3301 relating, among other things, the number of records read and processed, where application messages files are, what phone line numbers are detailed and the average length of a particular call for a particular period of time.

Turning now to FIGURE 34, shown is a Total Calls on Each Phone Line report 3401 showing, by telephone line, the number of calls received and what percentage of total calls received were handled on a particular line for a particular period of time. This report is invaluable for determining line loading and line number requirements.

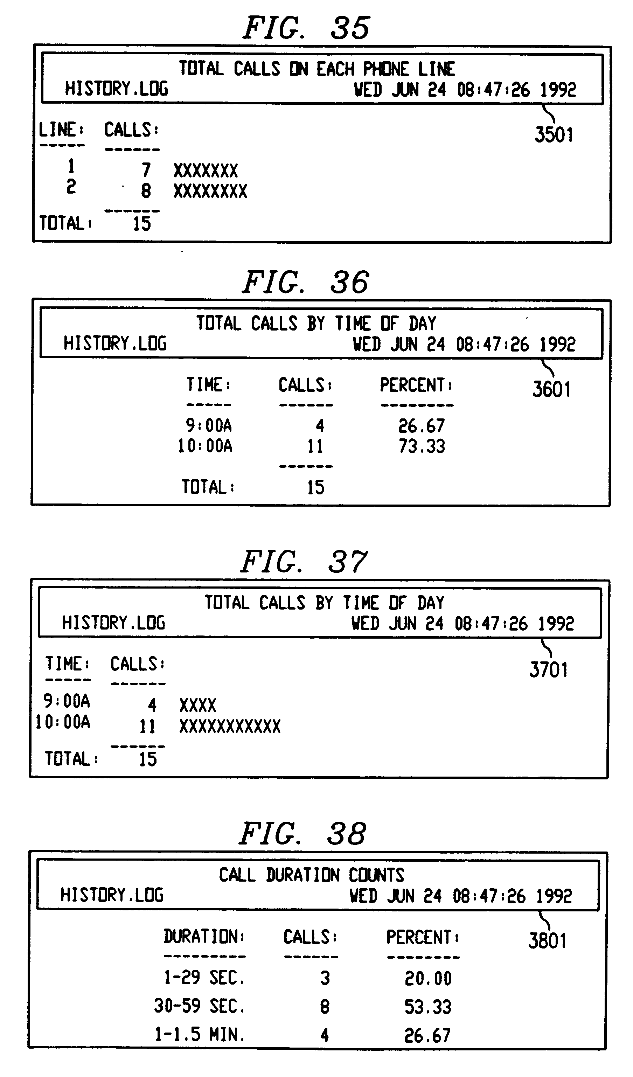

Turning now to FIGURE 35, shown is a Total Calls on Each Phone Line report 3501 showing, more in graphical form, the number of calls received on each line for a particular period of time. In the example shown in FIGURE 35, there are only two lines. However, since the VRU can handle a total of 48 lines, this graphical representation presented in this report 3501 can become most informative.

Turning now to FIGURE 36, shown as a Total Calls by Time of Day report 3601 showing, for each hour of the day, the number of calls received and that number as a percentage of the total calls received for a particular period of time.

Turning now to FIGURE 37, shown is a Total Calls by Time of Day report 3701 detailing in a more graphical manner the calls received by hour of day for a particular period of time. Again, only two hours of a given day are detailed. However, when a full business day is displayed, the graphical nature of the presentation in FIGURE 37 renders valuable information to the user or his organization concerning the frequency of use as a typical day progresses. This information may be used to determine the number of lines required if, perhaps, it is not necessarily desired to have enough lines to handle an absolute peak load of calls but, rather, to handle a reasonable number of calls received during a typical heavy period.

Turning now to FIGURE 38, shown is a Call Duration Counts report 3801 detailing calls listed by time of duration and percentage of total calls of that duration occupied for a particular period of time. This gives the user or organization an ability to statistically determine a typical length of call, again, with the idea of optimizing usage of the VRU and its associated telephone line resources.

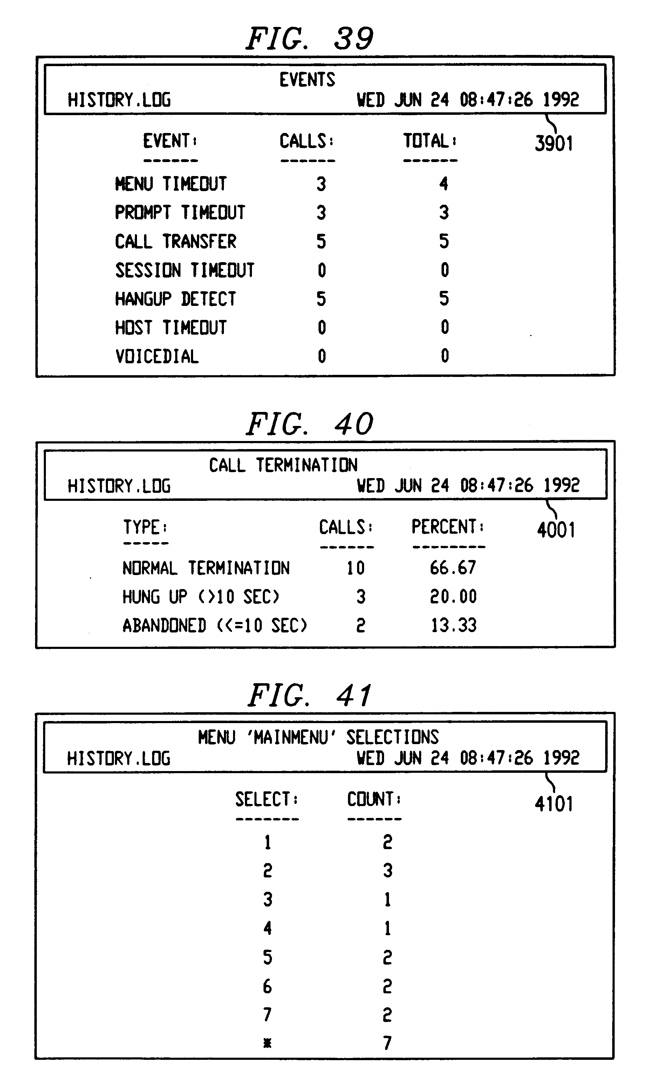

Turning now to FIGURE 39, shown is an Events report 3901 which shows numbers of particular events which have occurred in the reporting. In the example shown in FIGURE 39, menu time-outs, prompt time-outs, call transfers, session time-outs, hang-up detects, host time-outs and voicedials are detailed.

Turning now to FIGURE 40, a call termination report 4001 is detailed which shows how calls have ended for a particular period of time. This report is especially valuable in determining a "caller frustration quotient." In other words, how many persons are discouraged or confused by the automated VRU system. Obviously, the call termination report 4001 merely forms the basis for further analysis. But, in the example in FIGURE 40, two-thirds of the calls handled terminated normally. Possibly only one-third of the calls ended due to frustration or confusion on the part of the person dealing with a VRU. The user or his organization should find out more to alleviate the feelings.

Turning now to FIGURE 41, shown is a Menu "Main Menu" Selections report 4101 which details, by "Main Menu" option, the number of times that option was selected. This is helpful when determining for what purpose persons are using the VRU. It appears from the report 4101 in FIGURE 41 that most people stay within the VRU to inquire about rates and balances. However, a significant number (seven) have chosen to exit the system and speak to a human operator. If, by virtue of the Menu "Main Menu" Selections report 4101, the user or organization notices a long-term disuse of a particular function, it may indicate to the user or organization that it is probably best deleted from the menu of options presented in the main menu.

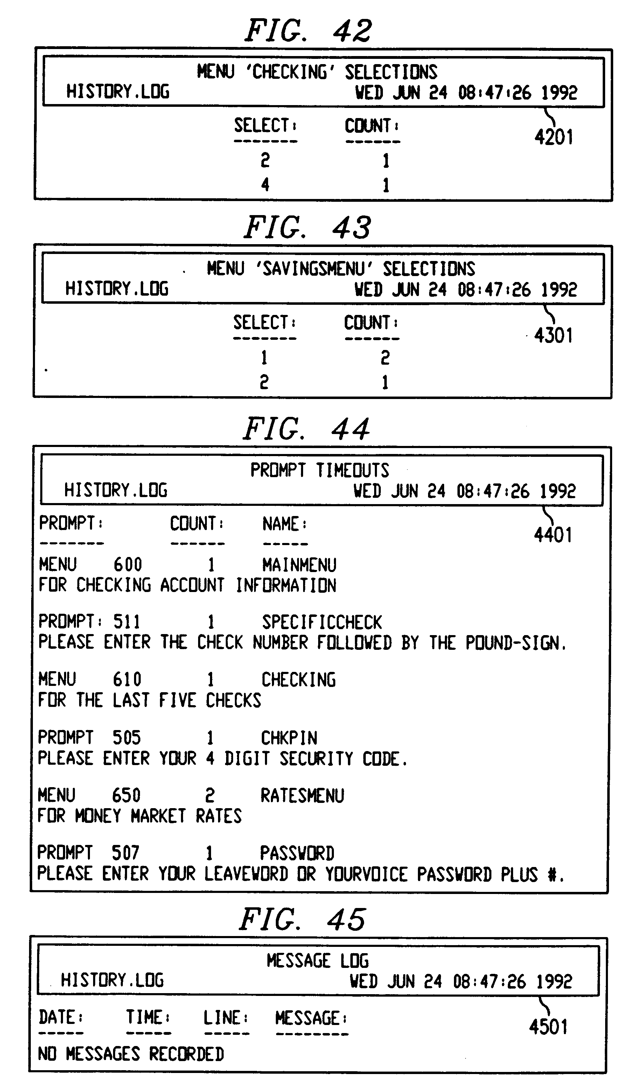

Turning now to FIGURE 42, shown is a Menu "Checking" Selections report 4201 detailing for the checking menu a similar report as was detailed for the main menu in FIGURE 41.

Turning now to FIGURE 43, shown is a Menu "Savings" Menu Selections report 4301 showing a report for the savings menu similar to that for the checking memo of FIGURE 42 or the main menu of FIGURE 41.

Turning now to FIGURE 44, shown is a Time-Outs report 4401. This report somewhat works in conjunction with the call termination report of FIGURE 40 to give the user and organization an indication of where in the system persons are abandoning their calls. It appears from the report 4401 that there is no particular prompt which stands out from the rest. However, if the money market rates prompt had a count of "22" instead of "2", this might indicate trouble which should be investigated further.

Finally, turning now to FIGURE 45, shown is a Message Log report 4501 detailing dates, times, lines and message text of messages received through the VRU. In the report 4501, no messages have been received or recorded.

It is apparent from the above detailed description that the present invention provides a novel semicustom voice response script generator comprising a circuit and software for presenting a series of screens to a user on an output device of a general purpose computer, the screens containing a plurality of programmable fields, circuitry and software for entering programming input from the user on an input device of the general purpose computer into the plurality of programmable fields and circuitry and software for generating the semicustom voice response script from stored script routines assembled according to instructions input in the plurality of programmable fields.

Although the present invention and its advantages have been described in detail, it should be understood that various changes, substitutions and alterations can be made herein without departing from the spirit and scope of the invention as defined by the appended claims.

## Claims

1. A semicustom voice response script generator, comprising:
means for presenting a series of screens to a user on an output device of a general purpose computer, said screens containing a plurality of programmable fields;
means for entering programming input from said user on an input device of said general purpose computer into said plurality of programmable fields; and
means for generating said semicustom voice response script from stored script routines assembled according to instructions input in said plurality of programmable fields.

2. The semicustom voice response script generator as recited in Claim 1 wherein said user selects options presented in said plurality of screens to thereby define said semicustom voice response script.

3. The semicustom voice response script generator as recited in Claim 2 wherein said voice response script operates in conjunction with a voice response system.

4. The semicustom voice response script generator as recited in Claim 3 wherein said voice response script and said voice response system cooperate to answer an incoming call from a person.

5. The semicustom voice response script generator as recited in Claim 4 wherein said voice response script presents options to said person, said options having been previously selected by said user.

6. The semicustom voice response script generator as recited in Claim 5 wherein said voice response script and said voice response system cooperate to reply to an inquiry from said person by voice.

7. The semicustom voice response script generator as recited in Claim 6 wherein said voice response script operates to supply banking information to said person.

8. A method of generating a semicustom voice response script, comprising the steps of:
presenting a series of screens to a user on an output device of a general purpose computer, said screens containing a plurality of programmable fields; entering programming input from said user on an input device of said general purpose computer into said plurality of programmable fields; and
generating said semicustom voice response script from stored script routines assembled according to instructions input in said plurality of programmable fields.

9. The method of generating a semicustom voice response script as recited in Claim 8 wherein said user selects options presented in said plurality of screens to thereby define said semicustom voice response script.

10. The method of generating a semicustom voice response script as recited in Claim 9 wherein said voice response script operates in conjunction with a voice response system.

11. The method of generating a semicustom voice response script as recited in Claim 10 wherein said voice response script and said voice response system cooperate to answer an incoming call from a person.

12. The method of generating a semicustom voice response script as recited in Claim 11 wherein said voice response script presents options to said person, said options having been previously selected by said user.

13. The method of generating a semicustom voice response script as recited in Claim 12 wherein said voice response script and said voice response system cooperate to reply to an inquiry from said person by voice.

14. The method of generating a semicustom voice response script as recited in Claim 13 wherein said voice response script operates to supply banking information to said person.

15. A system for creating a semicustom voice response script, comprising:
means for presenting a series of screens to a user on an output device of a general purpose computer, said screens containing a plurality of programmable fields;
means for accepting programming input from said user on an input device of said general purpose computer into said plurality of programmable fields;
means for generating said semicustom voice response script from said plurality of programmable fields, said generating means choosing and arranging stored script routines according to instructions input in said plurality of programmable fields; and
means, under control of said voice response script, for interacting with a person over a telephone line to take information from and give information to said person.

16. The system for creating a semicustom voice response script as recited in Claim 15 wherein said semicustom voice response script is designed to supply banking information to said person.

17. The system for creating a semicustom voice response script as recited in Claim 15 wherein said plurality of fields include fields containing financial data.

18. The system for creating a semicustom voice response script as recited in Claim 15 wherein said plurality of fields include fields containing data pertaining to telephone extensions to be called when certain conditions are satisfied.

19. The system for creating a semicustom voice response script as recited in Claim 15 wherein said plurality of fields include fields containing data pertaining to bank holidays.

20. The system for creating a semicustom voice response script as recited in Claim 15 wherein said semicustom voice response script allows for collection of statistics concerning calls received.
